Europäisches Patentamt

European Patent Office

Office européen des brevets

(19)

(11) Veröffentlichungsnummer: **0 173 080**
A2

(12) **EUROPÄISCHE PATENTANMELDUNG**

(21) Anmeldenummer: **85109359.1**

(22) Anmeldetag: **25.07.85**

(51) Int. Cl.⁴: **B 60 C 9/20**, B 60 C 9/18, B 60 C 15/02

(30) Priorität: **18.08.84 DE 3430500**

(43) Veröffentlichungstag der Anmeldung: **05.03.86**
**Patentblatt 86/10**

(84) Benannte Vertragsstaaten: **AT BE CH DE FR GB IT LI LU NL SE**

(71) Anmelder: **Continental Gummi-Werke Aktiengesellschaft, Königsworther Platz 1, D-3000 Hannover 1 (DE)**

(72) Erfinder: **Mauk, Gerhard, Dipl.-Ing., Bleichenstrasse 49 A II, D-3050 Wunstorf 2 (DE)**

(54) **Fahrzeugrad.**

(57) Die Erfindung bezieht sich auf ein luftbereiftes Fahrzeugrad mit einem Fahrzeugluftreifen, der eine in den Wülsten verankerte Radialkarkasse, einen Laufstreifen, zu beiden Seiten des Laufstreifens befindliche schulterartige, durch Stufung gebildete, mit der Fahrbahn nicht in Berührung kommende Verbreiterungsabschnitte und einen Gürtel aufweist, der seitlich so weit in jeden Verbreiterungsabschnitt hineinreicht, daß der im Verbreiterungsabschnitt liegende Gürtelteil eine Breite aufweist, die etwa 25 bis 40% der Breite beträgt, um die der Reifen an seiner breitesten Stelle über das Ende des Laufstreifens hinausragt.

Zur Erzielung eines geringen Rollwiderstands bei gleichzeitig hohem Fahrkomfort wird vorgeschlagen, daß der Reifen mit seinen Wülsten so weit axial innen auf der Felge angeordnet ist, daß sich die Reifenwülste vollständig axial innen von den Verbreiterungsabschnitten befinden, und daß weiterhin die Karkaßneutrale im Bereich der Reifenseitenwand im wesentlichen der Membrantheorie folgt.

Continental Gummi-Werke Aktiengesellschaft, Hannover

1

Fahrzeugrad

Die Erfindung betrifft ein luftbereiftes Fahrzeugrad mit einem Fahrzeugluftreifen, der eine in den Wülsten verankerte Radialkarkasse, einen Laufstreifen, zu beiden Seiten des Laufstreifens befindliche schulterartige, durch Stufung gebildete, mit der Fahrbahn nicht in Berührung kommende Verbreiterungsabschnitte und einen Gürtel aufweist, der seitlich so weit in jeden Verbreiterungsabschnitt hineinreicht, daß der im Verbreiterungsabschnitt liegende Gürtelteil eine Breite aufweist, die etwa 25 bis 40 % der Breite beträgt, um die der Reifen an seiner breitesten Stelle über das Ende des Laufstreifens hinausragt.

Ein Fahrzeugreifen mit den vorstehend genannten Merkmalen wird z. B. in einer älteren Anmeldung (P 33 13 535.5) beschrieben und zeichnet sich bereits in hohem Maße durch einen geringen Rollwiderstand und ein gleichmäßiges Abnutzungsbild am Laufstreifen aus, weiterhin durch eine verbesserte Dauerstandsfestigkeit auch im Bereich der Gürtelränder und durch eine befriedigende dynamische Weichheit. Es hat sich jedoch gezeigt, daß vor allem wegen der Steifigkeit der Wülste und der unteren Seitenwände Einfederungsbewegungen der Seitenwand in noch erheblichem Maße in die Laufflächenzone übertragen werden, so daß die Entkopplung zwischen dem Laufstreifenbereich und dem Seitenwandbereich noch nicht befriedigend gelöst ist.

Der Erfindung liegt deshalb die Aufgabe zugrunde, ein Fahrzeugrad der genannten Art anzugeben, bei dem die geschilderten Probleme nicht mehr auftreten, bei dem also im Reifen eine optimale Entkopplung

0173080

zwischen dem Laufstreifenbereich und dem Seitenwandbereich vorhanden ist.

Diese Aufgabe wird erfindungsgemäß dadurch gelöst, daß der Reifen mit seinen Wülsten so weit axial innen auf der Felge angeordnet ist, daß sich die Reifenwülste vollständig axial innen von den Verbreiterungsabschnitten befinden, und daß weiterhin die Karkaßneutrale im Bereich der Reifenseitenwand im wesentlichen der Membrantheorie folgt.

Durch die relativ starke Wölbung der Reifenseitenwand und durch die flexible, beinahe gelenkartig wirkende Aufhängung der Reifenseitenwand federt letztere in sich, woraus ein wesentlich erhöhter Fahrkomfort resultiert. Wegen der starken Entkopplung der Reifenseitenwand von der Laufstreifenzone wird kaum noch Bewegungsenergie von der Seitenwand in die Laufstreifenzone übertragen, so daß man beim erfindungsgemäßen Fahrzeugrad eine entscheidende Rollwiderstandsverringerung erzielt. Der fehlende Wulstdruck in den Seitenwänden führt zu höheren Kraftschlußwerten im gesamten Bereich der Reifenaufstandsfläche. Hierdurch ergibt sich mehr Sicherheit bei Nässe, beim Bremsen, in der Querbeschleunigung und im Aquaplaning-Verhalten. Schließlich ergibt sich ein gleichmäßigerer und vor allem geringerer Abrieb.

Wenn auch gemäß einer bevorzugten Ausführung der Erfindung die Reifenwülste am radial inneren Umfang der Felge angeordnet sind, so daß beim Einfedern ein seitliches Ausbauchen des Reifens ohne jegliche Behinderung durch die im Reifenhohlraum liegenden Felgenhörner erfolgen kann, bringt die Erfindung ebenfalls bei solchen Fahrzeugrädern erhebliche Vorteile, bei denen die Reifenwülste sich radial außen auf der Felge befinden. Dies wird vor allem durch den extrem flachen Verlauf der Karkaßneutralen im Bereich der Felgenhörner erzielt, der ein weites Aufbauchen der Reifenseitenwand zur Folge hat und damit ein Einfederungsverhalten ergibt, bei dem die Energie nicht mehr von der Reifenseitenwand auf den Laufstreifenbereich übertragen wird.

Zur Unterstützung dieser Entkopplungswirkung befindet sich gemäß einer weiteren Ausgestaltung der Erfindung zwischen zwei Gürtellagen eine dämpfungsarme Gummischicht.

Um den Reifen im unteren Seitenwand- und Wulstbereich bei völlig ausreichender Stabilität mit einem möglichst geringen Materialaufwand aufbauen zu können, wird vorgeschlagen, die Karkaßneutrale in diesem Bereich so auszulegen, daß sie der Funktion einer Kettenlinie gehorcht. Dabei gelten die gleichen Überlegungen, wie sie in einer älteren Anmeldung P 33 24 953.9 bereits beschrieben sind.

Nachfolgend werden zwei Ausführungsbeispiele der Erfindung anhand einer Zeichnung näher erläutert.

Es zeigt

Fig. 1 ein Fahrzeugrad, bei dem die Reifenwülste radial außen auf der Felge angeordnet sind, in einem radialen Teilschnitt,

Fig. 2 ein Fahrzeugrad mit radial innen an der Felge angeordneten Reifenwülsten, ebenfalls in einem radialen Teilschnitt,

Fig. 3 einen Ausschnitt eines Reifens für ein Fahrzeugrad nach Fig. 1 oder 2, wobei sich zwischen zwei Lagen eines vierlagigen Gürtels eine dämpfungsarme Gummischicht befindet, in einem radialen Teilschnitt.

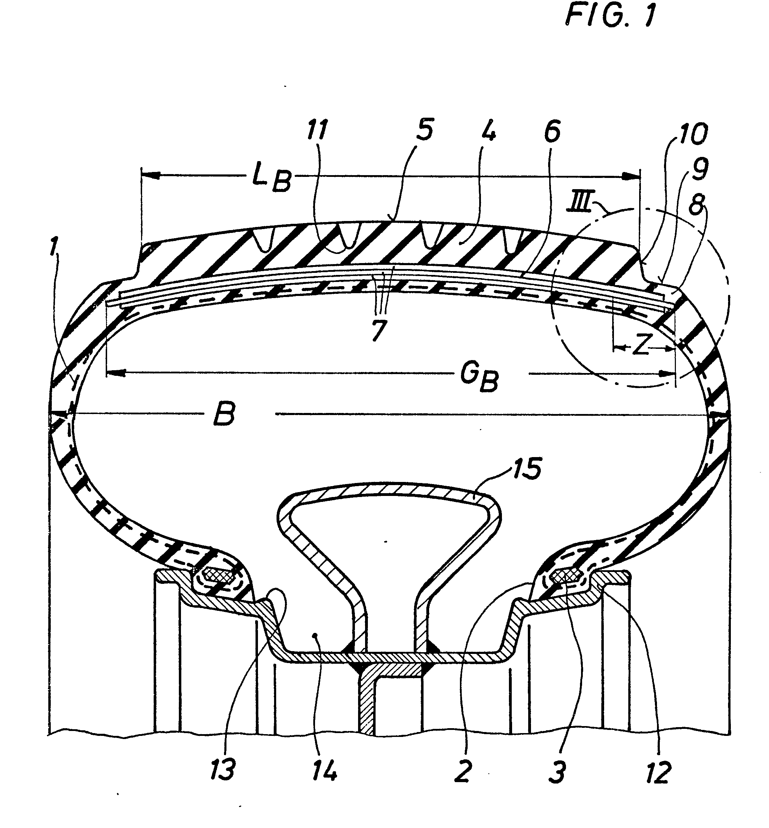

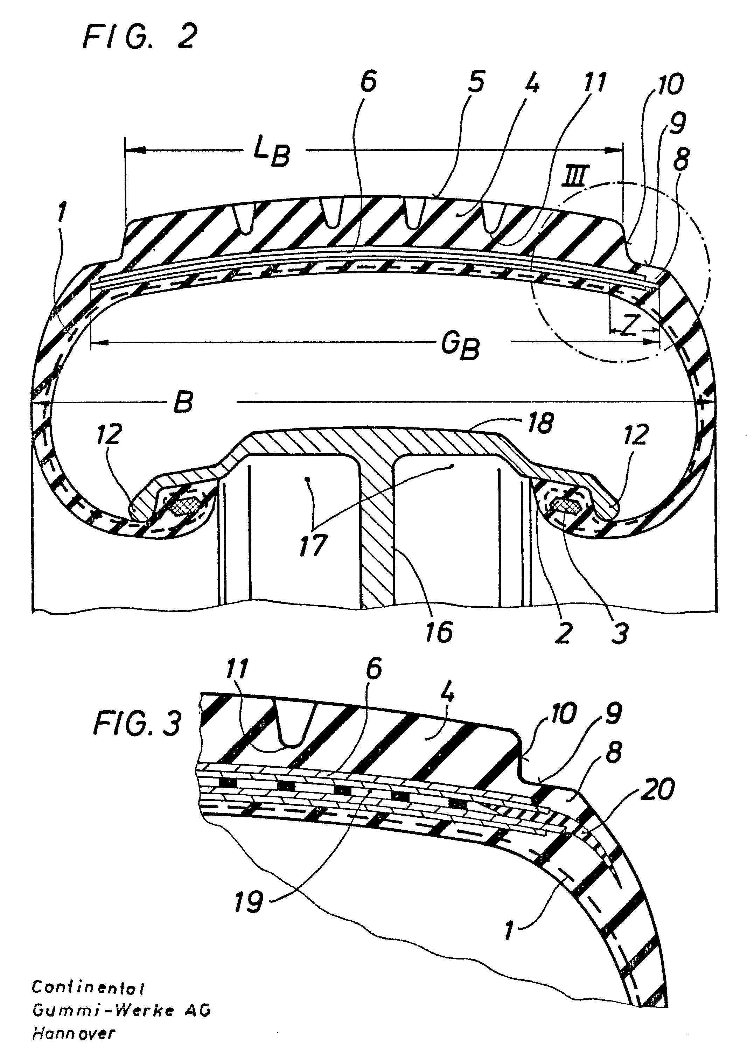

Beim Fahrzeugrad gemäß Fig. 1 und 2 besteht der Reifenkörper im wesentlichen aus Gummi oder gummiähnlichen Kunststoffen, und er weist eine sogenannte Radialkarksse 1 auf, bei der in bekannter Weise die Festigkeitsträger in zum Reifen radialen Ebenen angeordnet sind. Die Ränder der Karkasse 1 sind in den Reifenwülsten 2 durch Umschlingen von Wulstkernen 3 verankert.

Zwischen dem Laufstreifen 4 mit einer Lauffläche 5 und der Karkasse 1 befindet sich ein in Reifenumfangsrichtung zugfester Gürtel 6 aus drei übereinanderliegenden Cordlagen 7, deren Festigkeitsträger in jeder Lage parallel zueinander verlaufen, deren Festigkeitsträger aber in bezug auf die benachbarte Lage mit der Reifenumfangsrichtung abweichende Winkel einschließen. Es versteht sich, daß alle Teile des Reifens festhaftend aneinander anvulkanisiert sind.

Charakteristisch an dem vorgenannten Reifen ist je ein Verbreiterungsabschnitt 8 zu beiden Seiten des Reifenkörpers im Schulterbereich. Dieser Verbreiterungsabschnitt 8 weist eine im wesentlichen zylindrische, etwa parallel zur Lauffläche 4 verlaufende, zurückversetzte Grundfläche 9 und eine etwa senkrechte Stufenfläche 10 auf, die den Rand des Laufstreifens 4 bildet und damit seine Breite $L_B$ bestimmt.

Der Gürtel 6 ist im wesentlichen zylindrisch oder leicht konkav gestaltet, ebenso in etwa die Grundfläche 9, die ihrerseits auf einem Durchmesser liegt, der kleiner ist als der Durchmesser der Laufstreifenprofilierung auf dem Grunde seiner Profileinschnitte bei 11, und zwar in der Weise, daß auch bei abgenutztem Reifenprofil die Grundfläche 9 unter normalen Fahrbedingungen nicht mit der Fahrbahn in Berührung kommt.

Die Gürtelbreite ist mit $G_B$ und die etwa auf halber Höhe des Reifenquerschnitts gelegene größte Breite des Reifens mit B bezeichnet.

Der Gürtel 6 reicht seitlich so weit in jedem Verbreiterungsabschnitt 8 hinein, daß der im Verbreiterungsabschnitt 8 liegende Gürtelteil eine Breite aufweist, die etwa 25 bis 40 %, bevorzugt 30 % der Breite beträgt, um die der Reifen an seiner breitesten Stelle über das Ende des Laufstreifens 4 hinausragt, so daß die folgende Ungleichung gilt:

$$0,25 \leq \frac{G_B - L_B}{B - L_B} \leq 0,4$$

Dies bedeutet, daß die Zone Z, in der der Gürtelrand im Winkel zur Karkasse 1 verläuft, vergleichsweise klein ist und vorzugsweise höchstens das Doppelte des Maßes beträgt, um das der Gürtelrand gegenüber der senkrechten Stufenfläche 10 vorspringt. Damit ist ein entsprechend kleiner Stützgummi in Form der üblichen Unterleggummistreifen ausreichend. Zudem ergibt sich eine vergleichsweise große Ausbauchung durch die Breite B des Reifens.

Es ist wichtig, daß diese Ausbauchung der Reifenseitenwand auch in der unteren (radial inneren) Reifenhälfte vorhanden ist, damit die Reifenwand beim Einfedern in sich federn kann und nicht durch den Wulstdruck eines steifen und steilen Wulstes daran gehindert wird. Dies wird dadurch erreicht, daß der Reifen mit seinen Wülsten 2 so weit axial innen auf der Felge angeordnet ist, daß sich die Reifenwülste 2 vollständig axial innen von den Verbreiterungsabschnitten 3 befinden und daß weiterhin die Karkaßneutrale im Bereich der Seitenwand im wesentlichen der Membrantheorie folgt.

Beim Fahrzeugrad der Fig. 1 sind die Reifenwülste 2 am radial äußeren Umfang einer starren, einteiligen Felge neben sich nach radial außen erstreckenden Felgenhörnern 12 angeordnet. Die relativ flachen Wulstkerne 3 verlaufen dabei mit ihrer Grundfläche parallel zur Felgensitzfläche, die waagerecht oder leicht geneigt sein kann. Axial innen wird jeder Reifenwulst 2 durch einen sogenannten Hump 13 gesichert, neben dem sich nach axial innen hin je ein Tiefbett 14 für die Reifenmontage anschließt. Im Mittenbereich der Felge befindet sich radial außer ein Stützteil 15, das den größten Felgendurchmesser bestimmt und das zum Abstützen des Reifens bei einem Notlauf dient.

Beim Fahrzeugrad gemäß Fig. 2 befinden sich die Reifenwülste 2 am radial inneren Umfang einer starren, einteiligen Felge neben sich im wesentlichen nach radial innen erstreckenden Felgenhörnern 12. Zu beiden Seiten der Felgenschüssel 16 gelegene Montagehochbetten 17 ermöglichen die Reifenmontage. Der radial außen befindliche Teil des Felgenkranzes dient im Bereich der Hochbetten 17 als Stützfläche 18 für den Reifen bei einem Notlauf.

Die Karkaßneutralen können bei den Fahrzeugrädern der Fig. 1 und 2 so ausgelegt sein, daß sie im Bereich der Felgenhörner 12 der Funktion einer Kettenlinie gehorchen.

Der Reifen nach Fig. 3, der bei jedem der vorbeschriebenen Fahrzeugräder einsetzbar ist, zeichnet sich durch eine dämpfungsarme Gummischicht 19 aus, die sich zwischen den beiden mittleren Lagen eines vierlagigen Gürtels 6 befindet. Sie sollte nicht dicker als höchstens 5 mm sein. Sie reicht seitlich bis etwa zur Höhe des Laufstreifenrandes und wird dort von je einem Randabschnitt 20 einer härteren Gummimischung abgelöst, der außerhalb des Verbreiterungsabschnitts 8 endet. Geeignete Härten für die weichere Gummischicht 19 liegen im Bereich von 40 bis 50 Shore A, während die Randabschnitte 20 eine Härte von 58 bis 80 Shore A aufweisen können.

Es sollte angemerkt werden, daß die beschriebenen Fahrzeugräder zwar bevorzugt für den Einsatz bei Lastkraftwagen vorgesehen sind, daß sich die Erfindung jedoch nicht auf diesen Anwendungsfall beschränkt.

Vorzugsweise haben die Randabschnitte 20 eine Rückprallelastizität von etwa 40 bis 50 % (gemessen nach DIN 53512), während die Rückprallelastizität der Gummischicht 19 60 bis 70 % betragen soll. Dabei sollen die Rückprallelastizitäten der den Gürtel 6 umschließenden Gummimischungen im wesentlichen der Elastizität der Randstreifen 20 entsprechen.

## Ansprüche

1. Luftbereiftes Fahrzeugrad mit einem Fahrzeugluftreifen, der eine in den Wülsten verankerte Radialkarkasse, einen Laufstreifen, zu beiden Seiten des Laufstreifens befindliche schulterartige, durch Stufung gebildete, mit der Fahrbahn nicht in Berührung kommende Verbreiterungsabschnitte und einen Gürtel aufweist, der seitlich so weit in jeden Verbreiterungsabschnitt hineinreicht, daß der im Verbreiterungsabschnitt liegende Gürtelteil eine Breite aufweist, die etwa 25 bis 40 % der Breite beträgt, um die der Reifen an seiner breitesten Stelle über das Ende des Laufstreifens hinausragt, dadurch gekennzeichnet, daß der Reifen mit seinen Wülsten (2) so weit axial innen auf der Felge angeordnet ist, daß sich die Reifenwülste (2) vollständig axial innen von den Verbreiterungsabschnitten (8) befinden, und daß weiterhin die Karkaßneutrale im Bereich der Reifenseitenwand im wesentlichen der Membrantheorie folgt.

2. Fahrzeugrad nach Anspruch 1, dadurch gekennzeichnet, daß die Reifenwülste (2) sich am radial inneren Umfang der Felge neben sich im wesentlichen nach radial innen erstreckenden Felgenhörnern (12) befinden.

3. Fahrzeugrad nach Anspruch 1 oder 2, dadurch gekennzeichnet, daß die Karkasse auf Höhe der Felgenhörner (12) im wesentlichen waagerecht verläuft und die Karkaßneutrale in diesem Bereich der Funktion einer Kettenlinie gehorcht.

4. Fahrzeugrad nach Anspruch 1, dadurch gekennzeichnet, daß die Seitenwandstärke des Reifens von der Stelle der größten Reifenbreite (B) bis auf Höhe der Felgenhörner (12) etwa gleich ist.

5. Fahrzeugrad nach Anspruch 1, dadurch gekennzeichnet, daß zwischen zwei Lagen des Gürtels (6) eine dämpfungsarme Gummischicht (19) angeordnet ist, deren Wandstärke zumindest in etwa dem Durchmesser

0173080

der Gürtelfestigkeitsträger entspricht, jedoch 5 mm nicht übersteigt, und die seitlich etwa bis zur Höhe des Laufstreifenrandes reicht und dort von je einem Randabschnitt (20) einer härteren Gummimischung abgelöst wird, der außerhalb des Verbreiterungsabschnitts (8) endet.

Hannover, den 3. August 1984
3556                    Sr/Lu
84-50 P/Sr

0173080
*FIG. 1*

Continental
Gummi – Werke AG
Hannover

FIG. 2

FIG. 3

Continental
Gummi-Werke AG
Hannover